# EUROPEAN PATENT APPLICATION

(11) **EP 4 586 166 A1**
(43) Date of publication of application: **16.07.2025**
(21) Application number: 22958179.8
(22) Date of filing: 09.09.2022
(51) Int. Cl.: G06Q 10/101

(54) **LEARNING PROGRAM, GENERATION PROGRAM, LEARNING METHOD, AND INFORMATION PROCESSING DEVICE**

(71) Applicant: FUJITSU LIMITED, Kawasaki-shi, Kanagawa 211-8588 (JP)
(72) Inventor: KATAOKA, Masahiro, Kawasaki-shi, Kanagawa 211-8588 (JP); MATSUMURA, Ryo, Kawasaki-shi, Kanagawa 211-8588 (JP); ONOUE, Satoshi, Kawasaki-shi, Kanagawa 211-8588 (JP); NAGAO, Satomi, Kawasaki-shi, Kanagawa 211-8588 (JP)
(74) Representative: Hoffmann Eitle
(86) International application number: PCT/JP2022/033926
(87) International publication number: WO 2024/053101

(57) **Abstract**

An information processing apparatus converts a plurality of time-series numerical values included in sensing information of a sensor set in a machine or around the machine into a character string representing time-series transition. The information processing apparatus trains a machine learning model using training data that includes input data, which is generated based on a control command that controls the machine and information regarding the character string representing the time-series transition, and a label indicating whether or not abnormality is occurring in the machine.

## Description

### FIELD

The present invention relates to a training program and the like.

### BACKGROUND

For the purpose of reducing a shortage of manpower at a manufacturing site and improving operation efficiency, automation is progressing even in tasks that has previously needed human judgment, such as maintenance and line stopping of machine tools and chemical plants, and the like. For example, a manufacturing worker inputs a numerical control (NC) program to a machine tool to operate the machine tool, thereby improving manufacturing efficiency.

Note that, when abnormality such as a failure of some kind occurs in the machine tool, a manufacturing line may stop, which may deteriorate the manufacturing efficiency or cause human accident, and thus predicting a failure of the machine tool in advance is in demand.

For example, according to an existing technique, machine learning of a training model is carried out using a training data set including a plurality of pieces of sensor information and failure information, and a plurality of pieces of sensor information is input to the training model having been subject to the machine learning, thereby detecting occurrence of a failure in the machine tool.

### SUMMARY

### TECHNICAL PROBLEM

However, the existing technique described above has a problem that a failure of the machine tool may not be predicted with high accuracy.

For example, while the machine learning of the training model is carried out using a plurality of pieces of sensor information according to the existing technique, the sensor information of the machine tool may change in synchronization with a control command of the NC program, and thus it is difficult to predict a failure only with the sensor information.

In one aspect, an object is to provide a training program, a generation program, a training method, and an information processing apparatus of a training model capable of predicting a failure of a machine highly accurately.

### SOLUTION TO PROBLEM

In a first option, a computer is caused to execute the following process. The computer converts a plurality of time-series numerical values included in sensing information of a sensor set in a machine or around the machine into a character string representing time-series transition. The computer trains a machine learning model using training data that includes input data, which is generated based on a control command that controls the machine and information regarding the character string representing the time-series transition, and a label indicating whether or not a sign of failure is generated in the machine.

### ADVANTAGEOUS EFFECTS OF INVENTION

A failure of a machine may be predicted highly accurately.

### BRIEF DESCRIPTION OF DRAWINGS

FIG. 1 is a diagram illustrating an exemplary system according to the present embodiment.
FIG. 2 is a diagram (1) for explaining a process of a preparation phase.
FIG. 3 is a diagram (2) for explaining the process of the preparation phase.
FIG. 4 is a diagram (1) for explaining a process of a training phase.
FIG. 5 is a diagram (2) for explaining the process of the training phase.
FIG. 6 is a diagram illustrating an exemplary data structure of a training data table.
FIG. 7 is a diagram for explaining a process in which an information processing apparatus trains a machine learning model.
FIG. 8 is a diagram for explaining a process of an inference phase.
FIG. 9 is a functional block diagram illustrating a configuration of the information processing apparatus according to the present embodiment.
FIG. 10 is a diagram illustrating an exemplary data structure of a first vector dictionary.
FIG. 11 is a diagram illustrating an exemplary data structure of a second vector dictionary.
FIG. 12 is a diagram illustrating an example of a machine control program.
FIG. 13 is a flowchart (1) illustrating a processing procedure of the preparation phase.
FIG. 14 is a flowchart (2) illustrating the processing procedure of the preparation phase.
FIG. 15 is a flowchart (1) illustrating a processing procedure of the training phase.
FIG. 16 is a flowchart (2) illustrating the processing procedure of the training phase.
FIG. 17 is a flowchart (1) illustrating a processing procedure of the inference phase.
FIG. 18 is a flowchart (2) illustrating the processing procedure of the inference phase.
FIG. 19 is a diagram for explaining an exemplary relationship between a line shape and a PostScript program.
FIG. 20 is a diagram illustrating an exemplary hardware configuration of a computer that implements functions similar to those of the information processing apparatus according to the embodiment.

### DESCRIPTION OF EMBODIMENTS

Hereinafter, an embodiment of a training program, a generation program, a training method, and an information processing apparatus disclosed in the present application will be described in detail with reference to the drawings. Note that the embodiment is not limited by the present embodiment.

### [Embodiment]

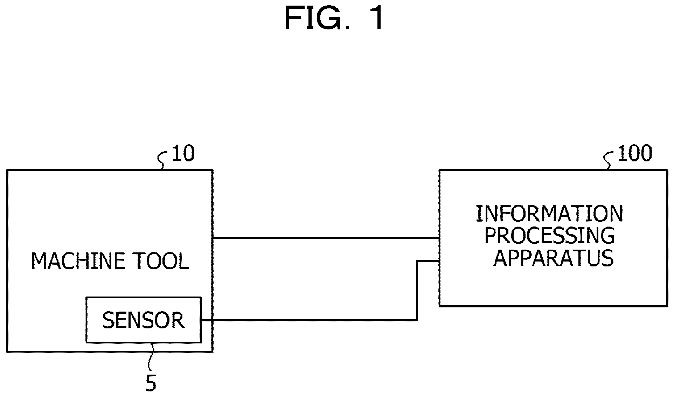

An exemplary system according to the present embodiment will be described. FIG. 1 is a diagram illustrating the exemplary system according to the present embodiment. As illustrated in FIG. 1, this system includes a sensor 5, a machine tool 10, and an information processing apparatus 100. The sensor 5 and the information processing apparatus 100 are coupled to each other by wire or wirelessly. The machine tool 10 and the information processing apparatus 100 are coupled to each other by wire or wirelessly. While the machine tool 10 and the information processing apparatus 100 are described as separate devices in the present embodiment, they may be a single device having a function of the machine tool 10 and a function of the information processing apparatus 100.

The sensor 5 is a temperature sensor that measures a temperature of the machine tool 10 and a temperature around the machine tool 10. The sensor 5 may be installed in the machine tool 10, or may be installed in the vicinity of the machine tool 10. While the sensor 5 is described as a temperature sensor as an example in the present embodiment, it may be another sensor, such as a vibration sensor, a humidity sensor, or the like. The sensor 5 outputs a value, which is a measurement result, to the information processing apparatus 100 each time the temperature is measured.

The machine tool 10 is a machine to be driven based on a machine control program input from the information processing apparatus 100. For example, the information processing apparatus 100 sequentially inputs statements of individual lines included in the machine control program to the machine tool 10, and the machine tool 10 sequentially executes the statements.

The information processing apparatus 100 predicts a failure of the machine tool 10 based on information regarding a character string of the machine control program for controlling the machine tool 10 and information obtained by converting time-series numerical values output from the sensor 5 into a character string representing time-series transition. For example, the information processing apparatus 100 carries out a process of a preparation phase, a process of a training phase, and a process of an inference phase. Hereinafter, the process of the preparation phase, the process of the training phase, and the process of the inference phase will be described in order.

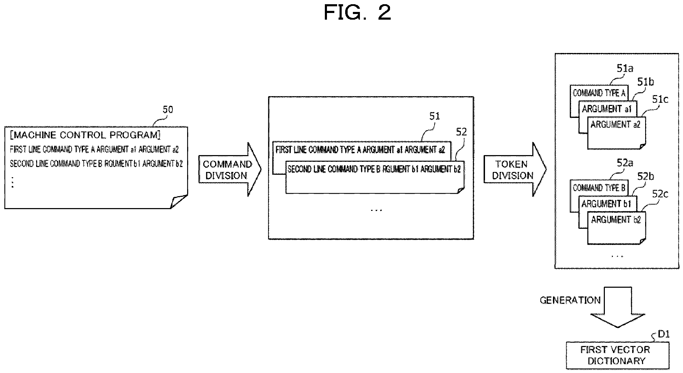

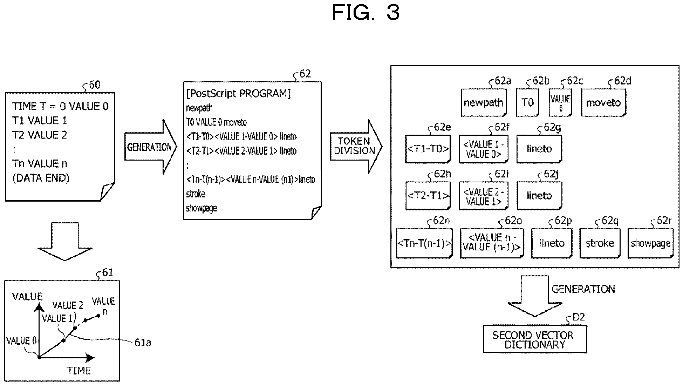

The process of the preparation phase will be described. FIGs. 2 and 3 are diagrams for explaining the process of the preparation phase. First, FIG. 2 will be described. The information processing apparatus 100 executes the following process using a machine control program 50. The machine control program 50 is an example of a "control command". The machine control program 50 is a program for controlling the machine tool 10, and is a program prepared in advance to generate a first vector dictionary D1 to be described later. The machine control program 50 has a plurality of lines, and each of the lines includes a command type, a plurality of arguments, and the like. In the following descriptions, each character string of each line of the machine control program 50 will be referred to as a "statement".

The information processing apparatus 100 performs command division on the machine control program 50, thereby generating a plurality of statements 51 and 52. For example, the statement 51 is a statement of the first line of the machine control program 50, and includes a command type A, an argument a1, an argument a2, and the like. The statement 52 is a statement of the second line of the machine control program 50, and includes a command type B, an argument b1, an argument b2, and the like. In FIG. 2, statements other than the statements 51 and 52 are omitted for convenience of explanation.

Subsequently, the information processing apparatus 100 performs token division on each statement, thereby dividing each statement into a plurality of tokens. For example, the information processing apparatus 100 divides the statement 51 into tokens 51a, 51b, and 51c. For example, the token 51a is the "command type A". The token 51b is the "argument a1". The token 51c is the "argument a2".

The information processing apparatus 100 divides the statement 52 into tokens 52a, 52b, and 52c. For example, the token 52a is the "command type B". The token 52b is the "argument b1". The token 52c is the "argument b2".

The information processing apparatus 100 divides other statements into tokens in a similar manner.

The information processing apparatus 100 arranges individual tokens in order after executing the token division. For example, the information processing apparatus 100 arranges the individual tokens in the order of the tokens 51a, 51b, and 51c included in the statement 51 of the first line, the tokens 52a, 52b, and 52c included in the statement of the second line, ..., and individual tokens included in a statement of an n-th line.

The information processing apparatus 100 applies an algorithm of continuous bag-of-words (CBoW) or skip-gram (Word2vec) to each token arranged in order, and calculates a vector of each token by regarding each token as a word. The information processing apparatus 100 registers, in the first vector dictionary D1, a relationship between the token included in the statement and a vector of the token. For example, the vector of the command type A, the vector of the argument a1, the vector of the argument a2, and the like included in the statement are registered in the first vector dictionary D1.

The information processing apparatus 100 repeatedly performs the process described above also on another machine control program to register a relationship between a token included in the machine control program and a vector in the first vector dictionary D1.

The description proceeds to FIG. 3. The information processing apparatus 100 executes the following process using sensor data 60. The sensor data 60 is time-series information in which a value (e.g., temperature) output from the sensor 5 is associated with time T.

A graph 61 is a graph indicating a relationship between the time and the value of the sensor data 60. In the graph 61, the horizontal axis corresponds to time, and the vertical axis corresponds to a value of the sensor 5. For example, the relationship between the time and the value of the sensor data 60 is represented by a line 61a of the graph 61.

The information processing apparatus 100 generates a PostScript (registered trademark) program 62 based on the relationship between each time and value included in the sensor data 60. The PostScript program 62 corresponds to the "character string representing time-series transition". The PostScript program 62 is a program of a page description language that draws the line 61a of the graph 61, and includes character strings to be used in the PostScript. Values 0 to n indicate temperature values for convenience. It is assumed that the value 0 = 0 holds.

The information processing apparatus 100 performs the token division on the PostScript program 62. For example, the PostScript program 62 is divided into tokens 62a, 62b, 62c, 62d, 62e, 62f, 62g, 62h, 62i, 62j, ..., 62n, 62o, 62p, 62q, and 62r. T0 to Tn indicate time for convenience. It is assumed that the T0 = 0 holds.

The token 62a is "newpath". The token 62b is "T0". The token 62c is "value 0". The token 62d is "moveto". The token 62e is "<T1 - T0>". The token 62f is "<value 1 - value 0>". The token 62g is "lineto". The token 62h is "<T2 - T1>". The token 62i is "<value 2 - value 1>". The token 62j is "lineto". The token 62n is "<Tn - T(n - 1)>". The token 62o is "<value n - value (n - 1)>". The token 62p is "lineto". The token 62q is "stroke". The token 62r is "showpage".

The information processing apparatus 100 arranges individual tokens in order after executing the token division. For example, the information processing apparatus 100 arranges the tokens 62a to 62r in the order of tokens 62a, 62b, 62c, 62d, 62e, 62f, 62g, 62h, 62i, 62j, ..., 62n, 62o, 62p, 62q, and 62r.

The information processing apparatus 100 applies the algorithm of CBoW or skip-gram (Word2vec) to each of the tokens 62a to 62r arranged in order, and calculates a vector of each token by regarding each of the tokens 62a to 62r as a word. The information processing apparatus 100 registers, in a second vector dictionary D2, a relationship between each token of the PostScript program 62 and a vector of the token. For example, vectors of new path and line to, a vector of T1 - T0, a vector of value 1 - value 0, and the like are registered in the second vector dictionary D2.

The information processing apparatus 100 repeatedly performs the process described above also on another PostScript program to register a relationship between a token included in the PostScript program and a vector in the second vector dictionary D2. Note that the drawing may be processed in a similar manner using not only a page description language, such as PostScript, but also a markup language, such as scalable vector graphics (SVG).

The information processing apparatus 100 executes the process of the preparation phase described above, thereby generating the first vector dictionary D1 and the second vector dictionary D2. Note that the information processing apparatus 100 may obtain, from an external device or the like, the first vector dictionary D1 and the second vector dictionary D2 that have already been generated, and may execute the subsequent process of the training phase and the process of the inference phase.

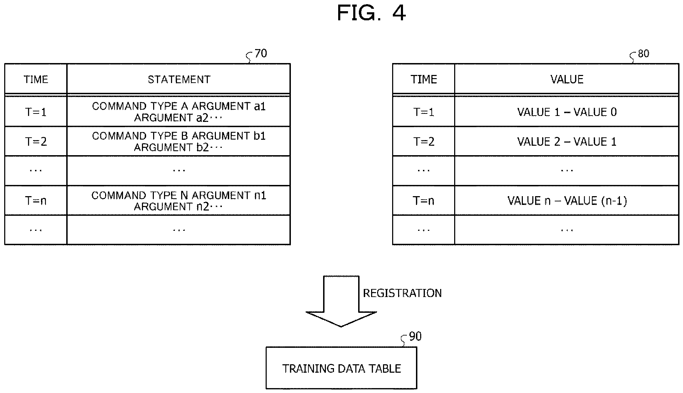

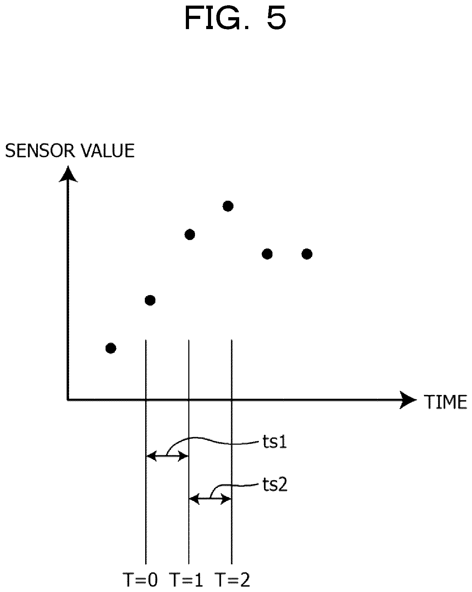

Next, the process of the training phase will be described. FIGs. 4 and 5 are diagrams for explaining the process of the training phase. First, FIG. 4 will be described. For example, in a case of operating the machine tool 10 using the machine control program, the information processing apparatus 100 sequentially outputs the statement of each line to the machine tool 10, and registers, in a command execution history table 70, the time at which the statement is output and the character string of the statement in association with each other.

Furthermore, each time a value (temperature) as a measurement result is obtained from the sensor 5, the information processing apparatus 100 registers, in a sensor value history table 80, the value and the time at which the value is obtained in association with each other.

The information processing apparatus 100 associates a statement in the command execution history table 70 with a plurality of sensor values in the sensor value history table 80 based on the command execution history table 70 and the sensor value history table 80. For example, the information processing apparatus 100 selects one statement in the command execution history table 70. The statement selected by the information processing apparatus 100 will be referred to as a "first statement". The time of the first statement will be referred to as "first time". The information processing apparatus 100 identifies the time of the statement (which will be referred to as a second statement hereinafter) executed next to the first statement. Such predetermined time may be changed as appropriate.

The information processing apparatus 100 extracts a plurality of values from the first time to second time among the sensor values registered in the sensor value history table 80. Here, the information processing apparatus 100 registers, in a training data table 90, the "first statement" and the "plurality of values from the first time to the second time" in association with each other. Furthermore, a manufacturing worker checks whether or not the machine tool 10 presents a sign of failure in the period from the first time to the second time, and sets a label of "normal" or "sign of failure present". The manufacturing worker may set a label in the training data table 90 at any timing. Such values and settings may be changed as appropriate.

The description proceeds to FIG. 5. In a graph 75 illustrated in FIG. 5, the horizontal axis corresponds to time, and the vertical axis corresponds to a value of the sensor 5. For example, the time of the first command is set to "T = 0". In addition, the time of the second command executed next to the first statement is set to "T = 1". Here, a section ts1 is a time period in which the machine tool 10 executes the first command. A section ts2 is a time period in which the machine tool 10 executes the second command. "T = 2" is the time of the next command of the second command. The information processing apparatus 100 registers, in the training data table 90, the first command and a plurality of values measured by the sensor 5 in the section ts1 in association with each other. The information processing apparatus 100 registers, in the training data table 90, the second command and a plurality of values measured by the sensor 5 in the section ts2 in association with each other. In the case of registering the plurality of values measured by the sensor 5 in the training data table 90, the information processing apparatus 100 also registers the time at which each value is measured.

The information processing apparatus 100 repeatedly executes the process described above while changing the selected statement, thereby registering, in the training data table 90, the statement, the plurality of sensor values corresponding to the statement, and the label in association with each other.

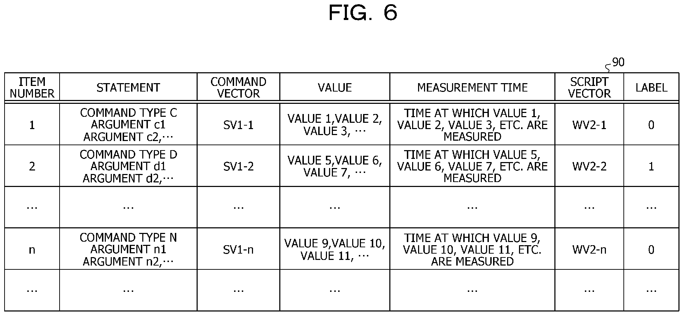

FIG. 6 is a diagram illustrating an exemplary data structure of the training data table. As illustrated in FIG. 6, the training data table 90 associates an item number, a statement, a command vector, values, measurement time, a script vector, and a label with each other. The item number is a number for identifying each record of the training data table 90.

The statement is a statement included in the command execution history table 70, and the values are a plurality of values included in the sensor value history table 80. A set of the statement and the values included in the same record of the training data table 90 corresponds to the set of the "first statement" and the "plurality of values from the first time to the second time" described with reference to FIG. 5. The label is a label indicating whether the machine tool 10 is in the state of "normal" or "sign of failure present". For example, the label is "0" when the machine tool 10 is normal. The label is "1" when the machine tool presents a sign of failure. The measurement time is time at which each value is measured.

Here, the command vector and the script vector included in the training data table 90 are calculated by the information processing apparatus 100 executing the following process.

A process in which the information processing apparatus 100 calculates a command vector will be described. The information processing apparatus 100 obtains a statement (e.g., command type C, argument c1, and argument c2) from the training data table 90, and divides the statement into a plurality of tokens. The process in which the information processing apparatus 100 divides the statement into a plurality of tokens is similar to the process described with reference to FIG. 2.

The information processing apparatus 100 compares each divided token with the first vector dictionary D1 to identify a vector of each token. The information processing apparatus 100 calculates a command vector by integrating the identified vectors of the individual tokens, and registers it in the training data table 90.

The information processing apparatus 100 repeatedly executes the process described above for each statement included in the training data table 90 to calculate a command vector for each statement, and registers it in the training data table 90.

A process in which the information processing apparatus 100 calculates a script vector will be described. The information processing apparatus 100 obtains, from the training data table 90, a plurality of values (e.g., value 1, value 2, value 3, and so on) set in one record and measurement time, and generates a PostScript program based on a relationship between the plurality of obtained values and time. The information processing apparatus 100 performs token division on the generated PostScript program. The information processing apparatus 100 compares each divided token with the second vector dictionary D2 to identify a vector of each token. The information processing apparatus 100 calculates a script vector by integrating the identified vectors of the individual tokens, and registers it in the training data table 90. The process of generating the PostScript program based on the relationship between the plurality of values and the time and the process of performing the token division on the PostScript program, which are performed by the information processing apparatus 100, are similar to the processes described with reference to FIG. 3.

The information processing apparatus 100 repeatedly executes the process described above for each value and measurement time included in the training data table 90 to calculate a script vector for each value, and registers it in the training data table 90.

The information processing apparatus 100 executes the process described above, thereby generating the training data table 90 for training a machine learning model.

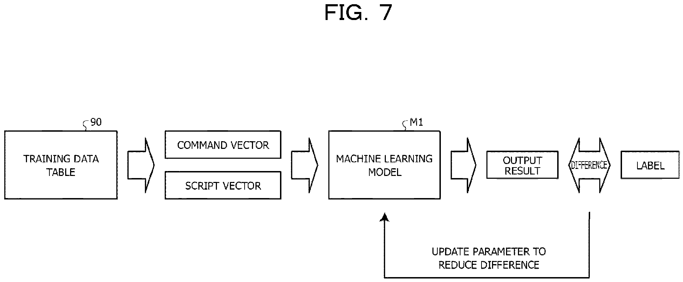

FIG. 7 is a diagram for explaining a process in which the information processing apparatus trains a machine learning model. A machine learning model M1 to be trained in the present embodiment is a deep neural network (DNN) or the like.

The information processing apparatus 100 selects one record (which will be referred to as training data hereinafter) from the training data table 90, and obtains a command vector, a script vector, and a label included in the selected training data. The information processing apparatus 100 inputs the command vector and the script vector to the machine learning model M1, calculates a difference between an output result of the machine learning model M1 and the label, and updates parameters of the machine learning model M1 to reduce the difference.

The information processing apparatus 100 repeatedly executes the process described above based on a plurality of pieces of the training data. For example, the information processing apparatus 100 trains the machine learning model M1 based on backpropagation.

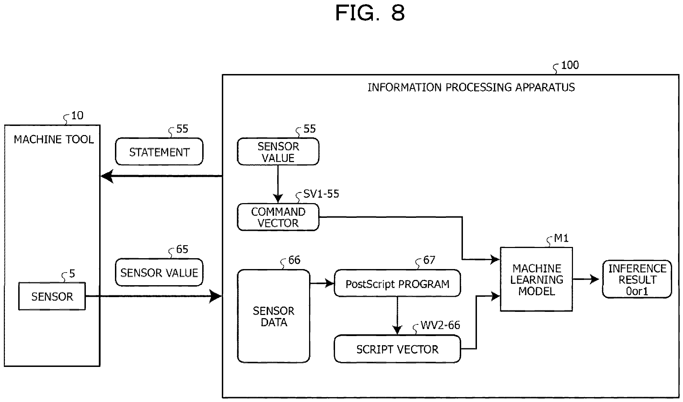

Next, the process of the inference phase will be described. FIG. 8 is a diagram for explaining the process of the inference phase. For example, the information processing apparatus 100 outputs a statement 55 included in the machine control program to the machine tool 10 to drive the machine tool 10. The information processing apparatus 100 obtains a sensor value from the sensor 5. For example, assuming that a section in which the statement 55 is executed by the machine tool 10 is a section ts55, the information processing apparatus 100 obtains, in the section ts55, a relationship between the value received from the sensor 5 and the time (measurement time) as sensor data 66. The information processing apparatus may set, as the section ts55, a time period from the time at which the statement 55 is output to the machine tool 10 until a preset predetermined time later.

The information processing apparatus 100 divides the statement 55 into a plurality of tokens. The process in which the information processing apparatus 100 divides the statement into a plurality of tokens is similar to the process described with reference to FIG. 2. The information processing apparatus 100 compares each divided token with the first vector dictionary D1 to identify a vector of each token. The information processing apparatus 100 calculates a command vector SV1-55 by integrating the identified vectors of the individual tokens.

The information processing apparatus 100 generates a PostScript program 67 based on the relationship between the time and a plurality of values included in the sensor data 66. The information processing apparatus 100 performs token division on the generated PostScript program 67. The information processing apparatus 100 compares each divided token with the second vector dictionary D2 to identify a vector of each token. The information processing apparatus 100 calculates a script vector WV2-66 by integrating the identified vectors of the individual tokens. The process of generating the PostScript program based on the relationship between the plurality of values and the time and the process of performing the token division on the PostScript program, which are performed by the information processing apparatus 100, are similar to the processes described with reference to FIG. 3.

The information processing apparatus 100 inputs the command vector SV1-55 and the script vector WV2-66 to the trained machine learning model M1, thereby obtaining an inference result. The information processing apparatus 100 determines that the machine tool 10 is normal when the inference result is "0". On the other hand, the information processing apparatus 100 determines that the machine tool 10 presents a sign of failure when the inference result is "1", and outputs a warning.

As described above, the information processing apparatus 100 according to the present embodiment generates a PostScript program capable of drawing time-series value displacement based on the information in which the value as the measurement result of the sensor 5 set in the machine tool 10 is associated with the time. The information processing apparatus 100 calculates a command vector of the statement for the machine tool 10 and a script vector of the PostScript program, and trains the machine learning model M1 based on the command vector and the script vector. By using the machine learning model M1, a failure of the machine tool 10 may be predicted highly accurately.

The information processing apparatus 100 temporarily generates a PostScript program based on the information in which the value as the measurement result of the sensor 5 is associated with the time, and calculates a script vector based on a character string of the PostScript program, thereby training the machine learning model M1 and predicting a failure. As a result, training and failure prediction may be performed only by the machine learning model M1 for natural language.

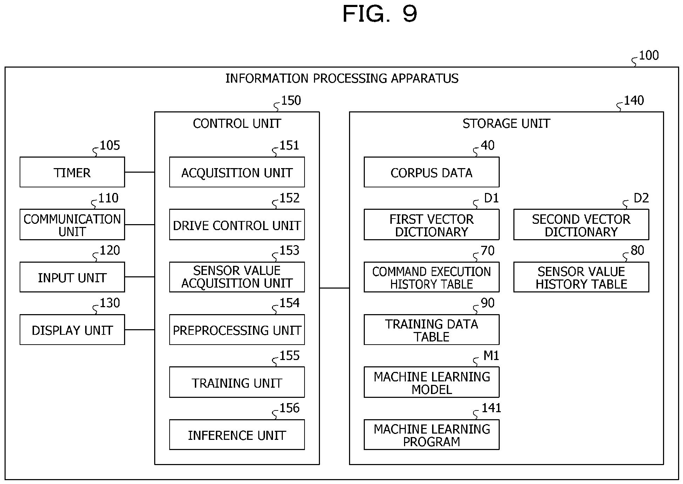

Next, an exemplary configuration of the information processing apparatus that executes the processes described with reference to FIGs. 1 to 8 will be described. FIG. 9 is a functional block diagram illustrating a configuration of the information processing apparatus according to the present embodiment. As illustrated in FIG. 9, the information processing apparatus 100 includes a timer 105, a communication unit 110, an input unit 120, a display unit 130, a storage unit 140, and a control unit 150.

The timer 105 outputs information regarding the current time to the control unit 150. Note that the control unit 150 may obtain the information regarding the current time from an external device in the network.

The communication unit 110 is coupled to the machine tool 10, the sensor 5, an external device, and the like by wire or wirelessly, and carries out data communication. For example, the communication unit 110 is a network interface card (NIC) or the like.

The input unit 120 is an input device that inputs various types of information to the information processing apparatus 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 includes corpus data 40, the first vector dictionary D1, the second vector dictionary D2, the command execution history table 70, the sensor value history table 80, the training data table 90, the machine learning model M1, and a machine control program 141. The storage unit 140 is implemented by, for example, a semiconductor memory element such as a random access memory (RAM), a flash memory, or the like, or a storage device such as a hard disk, an optical disk, or the like.

The corpus data 40 includes the machine control program 50 and the sensor data 60, and the like to be used when the preparation phase is carried out. The corpus data 40 is prepared in advance, and is used when the first vector dictionary D1 and the second vector dictionary D2 are generated.

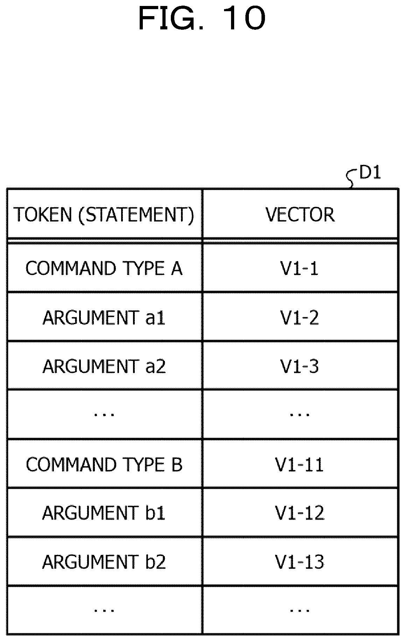

The first vector dictionary D1 is a dictionary indicating a vector of a token (command type, argument, etc.) included in a statement of the machine control program. FIG. 10 is a diagram illustrating an exemplary data structure of the first vector dictionary. As illustrated in FIG. 10, the first vector dictionary D1 associates a token of a statement with a vector.

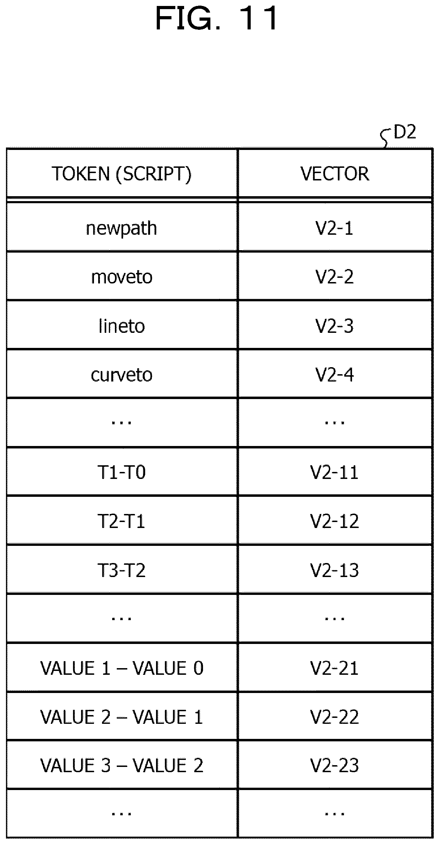

The second vector dictionary D2 is a dictionary indicating a vector of a token included in the PostScript program. FIG. 11 is a diagram illustrating an exemplary data structure of the second vector dictionary. As illustrated in FIG. 11, the second vector dictionary D2 associates a token included in the PostScript program with a vector.

The command execution history table 70 retains a statement output to the machine tool 10 from a drive control unit 152 of the control unit 150 and time at which the statement is output in association with each other. Other descriptions regarding the command execution history table 70 correspond to the descriptions of the command execution history table 70 described with reference to FIG. 4.

The sensor value history table 80 retains a value obtained from the sensor 5 and time at which the value is obtained in association with each other. Other descriptions regarding the sensor value history table 80 correspond to the descriptions of the sensor value history table 80 described with reference to FIG. 4.

The training data table 90 is a table that holds the training data generated by the processing of the training phase described above. Descriptions regarding the training data table 90 correspond to the descriptions of the training data table 90 described with reference to FIG. 6.

When a command vector and a script vector are input, the machine learning model M1 outputs an estimation result as to whether or not the machine tool 10 is normal. The machine learning model M1 is a DNN or the like.

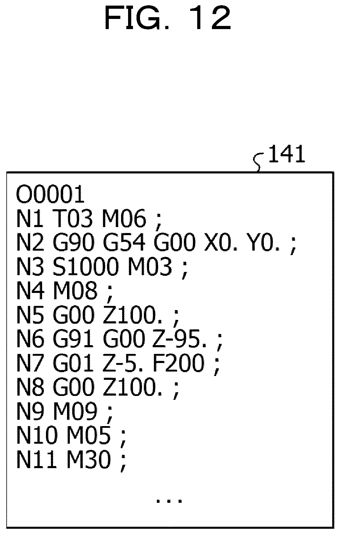

The machine control program 141 includes a statement for controlling the machine tool 10 in the training phase or in the inference phase. FIG. 12 is a diagram illustrating an example of the machine control program. As illustrated in FIG. 12, the machine control program includes a plurality of statements, and each of the statements includes a command type, an argument, and the like.

The description returns to FIG. 9. The control unit 150 includes an acquisition unit 151, a drive control unit 152, a sensor value acquisition unit 153, a preprocessing unit 154, a training unit 155, and an inference unit 156. The control unit 150 is implemented by, for example, a central processing unit (CPU) or a micro processing unit (MPU). In addition, the control unit 150 may be implemented by, for example, an integrated circuit such as an application specific integrated circuit (ASIC), a field programmable gate array (FPGA), or the like.

The acquisition unit 151 obtains the corpus data 40 from an external device or the like via a network, and registers the obtained corpus data 40 in the storage unit 140. The acquisition unit 151 may obtain information regarding the first vector dictionary D1 and the second vector dictionary D2 from an external device, and may register it in the storage unit 140.

The drive control unit 152 obtains a statement from the machine control program 141 in the training phase and in the inference phase, and outputs the obtained statement to the machine tool 10 to drive the machine tool 10. In addition, the drive control unit 152 obtains the time at which the statement is output to the machine tool 10 from the timer 105, and registers, in the command execution history table 70, the time and the statement in association with each other. The drive control unit 152 repeatedly executes the process described above each time a statement is obtained from the machine control program 141.

The drive control unit 152 may obtain a statement from the machine control program 141 in the training phase or in the inference phase, or may obtain a statement from machine control programs different from each other in the training phase and the inference phase.

The sensor value acquisition unit 153 obtains a sensor value from the sensor 5 in the training phase and in the inference phase. The sensor value acquisition unit 153 obtains the time at which the sensor value is obtained from the timer 105, and registers, in the sensor value history table 80, the time and the sensor value in association with each other. The sensor value acquisition unit 153 repeatedly executes the process described above each time a value is obtained from the sensor 5.

The preprocessing unit 154 executes the process of the preparation phase described with reference to FIGs. 2 and 3. For example, the preprocessing unit 154 obtains the machine control program 50 included in the corpus data 40, and performs command division and token division on the machine control program 50. The preprocessing unit 154 applies the algorithm of CBoW or skip-gram (Word2vec) to each token, and calculates a vector of each token. The preprocessing unit 154 registers, in the first vector dictionary D1, a relationship between the token included in the statement and a vector of the token.

The preprocessing unit 154 obtains the sensor data 60 included in the corpus data 40, and generates the PostScript program 62 based on the relationship between each time and value included in the sensor data 60. The preprocessing unit 154 divides the PostScript program 62 into a plurality of tokens, and applies the algorithm of Word2vec to each token to calculate a vector of each token. The preprocessing unit 154 registers, in the second vector dictionary D2, a relationship between each token of the PostScript program 62 and a vector of the token.

Other processing regarding the preprocessing unit 154 is similar to the processing of the preparation phase described with reference to FIGs. 2 and 3.

The training unit 155 executes the process of the training phase described with reference to FIGs. 4 to 7. The training unit 155 associates a statement in the command execution history table 70 with a plurality of sensor values in the sensor value history table 80 based on the command execution history table 70 and the sensor value history table 80. The training unit 155 obtains information regarding a label from the input unit 120 or the like. The training unit 155 registers, in the training data table 90, a statement, a plurality of sensor values corresponding to the statement, and a label in association with each other.

The training unit 155 executes the following process for each statement registered in the training data table 90. The training unit 155 divides a statement into a plurality of tokens, and compares each divided token with the first vector dictionary D1 to identify a vector of each token. The training unit 155 calculates a command vector by integrating the identified vectors of the individual tokens, and registers the calculated command vector in the training data table 90.

The training unit 155 executes the following process for the value of the sensor 5 and the measurement time of each value registered in the training data table 90. The training unit 155 generates a PostScript program based on the relationship between the plurality of values and the time. The training unit 155 performs token division on the PostScript program, and compares each divided token with the second vector dictionary D2 to identify a vector of each token. The training unit 155 calculates a script vector by integrating the identified vectors of the individual tokens, and registers it in the training data table 90.

The training unit 155 executes the process described above, thereby generating the training data table 90 for training the machine learning model M1.

The training unit 155 selects training data from the training data table 90, and obtains a command vector, a script vector, and a label included in the selected training data. The training unit 155 inputs the command vector and the script vector to the machine learning model M1, calculates a difference between an output result of the machine learning model M1 and the label, and updates the parameters of the machine learning model M1 to reduce the difference.

The training unit 155 repeatedly executes the process described above based on a plurality of pieces of the training data. For example, the training unit 155 trains the machine learning model M1 based on backpropagation.

Other processing regarding the training unit 155 is similar to the processing of the training phase described with reference to FIGs. 4 to 7.

The inference unit 156 executes the process of the inference phase described with reference to FIG. 8. The inference unit 156 obtains a statement (e.g., statement 55) output to the machine tool 10 by the drive control unit 152. Furthermore, the inference unit 156 obtains, from the sensor value history table 80, information regarding the time and the value of the sensor 5 in the section in which the obtained statement 55 is executed by the machine tool 10. For example, assuming that the section in which the statement 55 is executed by the machine tool 10 is the section ts55, the inference unit 156 obtains, from the sensor value history table 80, a relationship between the value received from the sensor 5 and the time (measurement time) as the sensor data 66 in the section ts55.

The inference unit 156 divides the statement 55 into a plurality of tokens. The process in which the inference unit 156 divides the statement into a plurality of tokens is similar to the process described with reference to FIG. 2. The inference unit 156 compares each divided token with the first vector dictionary D1 to identify a vector of each token. The inference unit 156 calculates the command vector SV1-55 by integrating the identified vectors of the individual tokens.

The inference unit 156 generates the PostScript program 67 based on the relationship between the time and the plurality of values included in the sensor data 66. The inference unit 156 performs token division on the generated PostScript program 67. The inference unit 156 compares each divided token with the second vector dictionary D2 to identify a vector of each token. The inference unit 156 calculates the script vector WV2-66 by integrating the identified vectors of the individual tokens. The process of generating the PostScript program based on the relationship between the plurality of values and the time and the process of performing the token division on the PostScript program, which are performed by the inference unit 156, are similar to the processes described with reference to FIG. 3.

The inference unit 156 inputs the command vector SV1-55 and the script vector WV2-66 to the trained machine learning model M1, thereby obtaining an inference result. The inference unit 156 determines that the machine tool 10 is normal when the inference result is "0". On the other hand, the inference unit 156 determines that the machine tool 10 presents a sign of failure when the inference result is "1", and outputs a warning to the display unit 130 or the like.

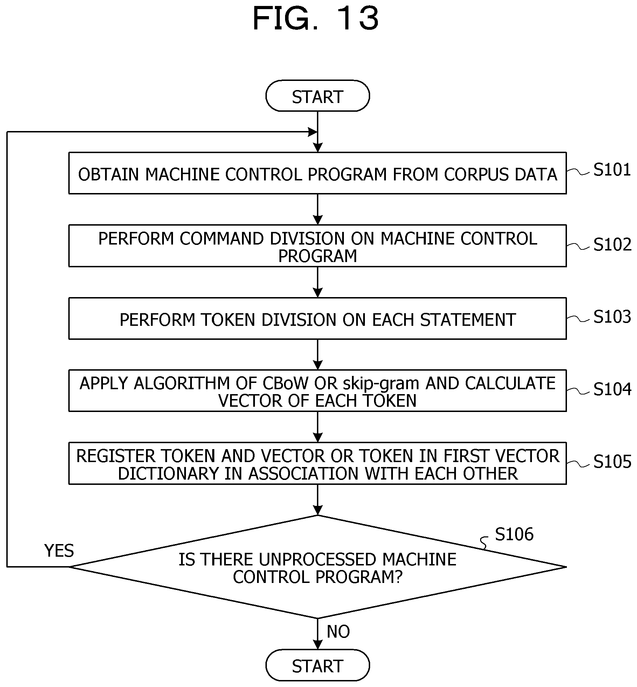

Next, an exemplary processing procedure of the information processing apparatus 100 according to the present embodiment will be described. FIG. 13 is a flowchart (1) illustrating a processing procedure of the preparation phase. The preprocessing unit 154 of the information processing apparatus 100 obtains a machine control program from the corpus data 40 (step S101). The preprocessing unit 154 performs command division on the machine control program (step S102).

The preprocessing unit 154 performs token division on each statement (step S103). The preprocessing unit 154 applies the algorithm of CBoW or skip-gram and calculates a vector of each token (step S104).

The preprocessing unit 154 registers, in the first vector dictionary D1, the token and the vector of the token in association with each other (step S105).

If there is an unprocessed machine control program (Yes in S106), the preprocessing unit 154 proceeds to step S101. On the other hand, if there is no unprocessed machine control program (No in step S106), the preprocessing unit 154 terminates the process.

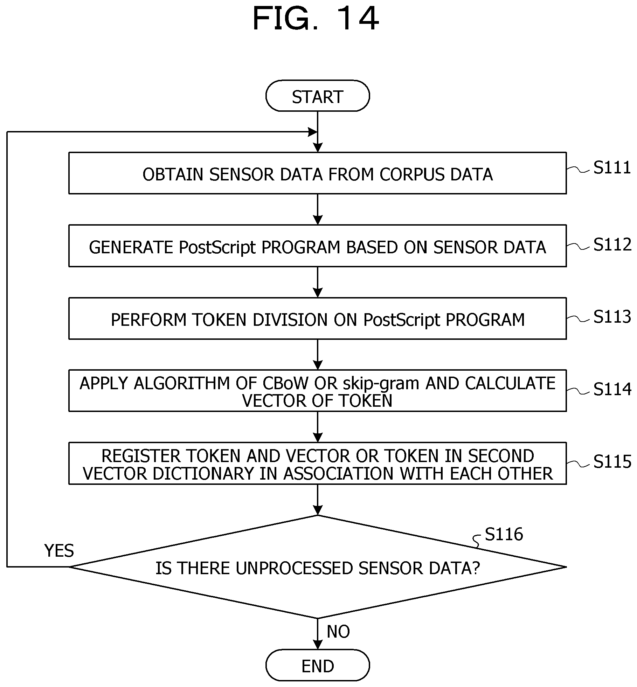

FIG. 14 is a flowchart (2) illustrating the processing procedure of the preparation phase. The preprocessing unit 154 of the information processing apparatus 100 obtains sensor data from the corpus data 40 (step S111). The preprocessing unit 154 generates a PostScript program based on the relationship between each time and value included in the sensor data (step S112).

The preprocessing unit 154 performs token division on the PostScript program (step S113). The preprocessing unit 154 applies the algorithm of CBoW or skip-gram and calculates a vector of each token (step S114).

The preprocessing unit 154 registers, in the second vector dictionary D2, the token and the vector of the token in association with each other (step S115).

If there is unprocessed sensor data (Yes in step S116), the preprocessing unit 154 proceeds to step S111. On the other hand, if there is no unprocessed sensor data (No in step S116), the preprocessing unit 154 terminates the process.

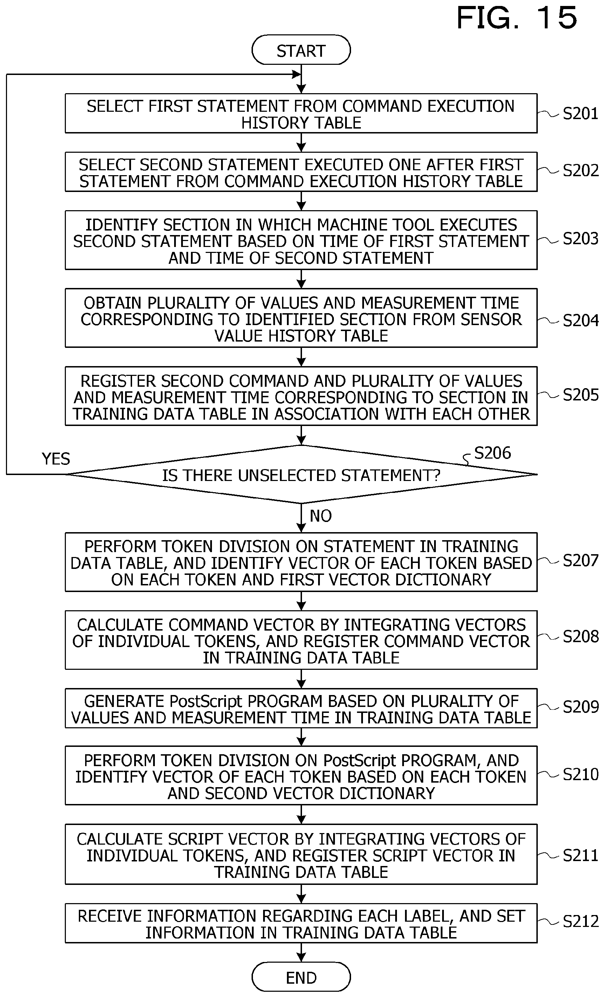

FIG. 15 is a flowchart (1) illustrating a processing procedure of the training phase. As illustrated in FIG. 15, the training unit 155 of the information processing apparatus 100 selects the first statement from the command execution history table 70 (step S201). The training unit 155 selects the second statement executed one after the first statement from the command execution history table 70 (step S202).

The training unit 155 identifies a section in which the machine tool 10 executes the second statement based on the time of the first statement and the time of the second statement (step S203). The training unit 155 obtains the plurality of values and the measurement time corresponding to the identified section from the sensor value history table 80 (step S204). The training unit 155 registers, in the training data table 90, the second command and the plurality of values and the measurement time corresponding to the section in association with each other (step S205).

If there is an unselected statement in the command execution history table 70 (Yes in step S206), the training unit 155 proceeds to step S201. On the other hand, if there is no unselected statement in the command execution history table 70 (No in step S206), the training unit 155 proceeds to step S207.

The training unit 155 performs token division on the statement in the training data table 90, and identifies a vector of each token based on each token and the first vector dictionary D1 (step S207). The training unit 155 calculates a command vector by integrating the vectors of the individual tokens, and registers it in the training data table 90 (step S208).

The training unit 155 generates a PostScript program based on the plurality of values and the measurement time in the training data table 90 (step S209). The training unit 155 performs token division on the PostScript program, and identifies a vector of each token based on each token and the second vector dictionary D2 (step S210). The training unit 155 calculates a script vector by integrating the vectors of the individual tokens, and registers it in the training data table 90 (step S211).

The training unit 155 receives information regarding each label from the input unit 120 or the like, and sets it in the training data table 90 (step S212).

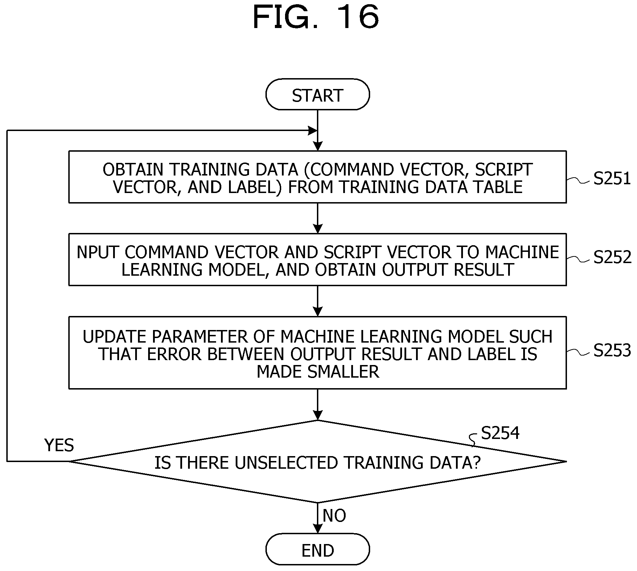

FIG. 16 is a flowchart (2) illustrating the processing procedure of the training phase. As illustrated in FIG. 16, the training unit 155 of the information processing apparatus 100 obtains, as training data, a set of a command vector, a script vector, and a label from the training data table 90 (step S251).

The training unit 155 inputs the command vector and the script vector to the machine learning model, and obtains an output result (step S252).

The training unit 155 updates the parameters of the machine learning model M1 such that an error between the output result and the label is made smaller (step S253).

If there is unselected training data (Yes in step S254), the training unit 155 proceeds to step S251. On the other hand, if there is no unselected training data (No in step S254), the training unit 155 terminates the process.

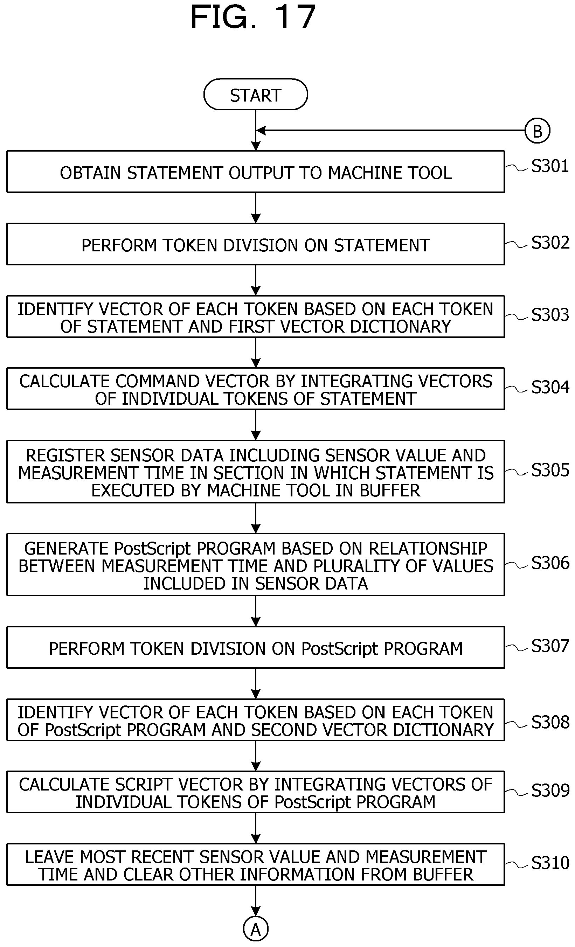

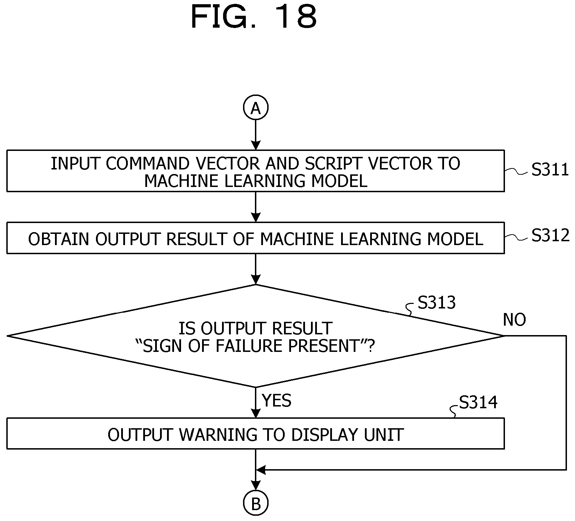

FIGs. 17 and 18 are flowcharts illustrating a processing procedure of the inference phase. As illustrated in FIG. 17, the inference unit 156 of the information processing apparatus 100 obtains the statement output to the machine tool 10 (step S301). The inference unit 156 performs token division on the statement (step S302). The inference unit 156 identifies a vector of each token based on each token of the statement and the first vector dictionary (step S303). The inference unit 156 calculates a command vector by integrating the vectors of the individual tokens of the statement (step S304).

The inference unit 156 registers, in a buffer, sensor data including a sensor value and measurement time in the section in which the statement is executed by the machine tool (step S305). The inference unit 156 generates a PostScript program based on the relationship between the measurement time and the sensor value included in the sensor data (step S306).

The inference unit 156 performs token division on the PostScript program (step S307). The inference unit 156 identifies a vector of each token based on each token of the PostScript program and the second vector dictionary D2 (step S308). The inference unit 156 calculates a script vector by integrating the vectors of the individual tokens of the PostScript program (step S309).

The inference unit 156 leaves the most recent sensor value and measurement time and clears other information from the buffer (step S310), and proceeds to step S311 in FIG. 18.

As illustrated in FIG. 18, the inference unit 156 inputs the command vector and the script vector to the machine learning model M1 (step S311). The inference unit 156 obtains an output result of the machine learning model M1 (step S312).

If the output result is "sign of failure present", (Yes in step S313), the inference unit 156 outputs a warning to the display unit 130 (step S314), and proceeds to step S301 in FIG. 17.

If the output result is not "sign of failure present" (No in step S313), the inference unit 156 proceeds to step S301 in FIG. 17.

Next, effects of the information processing apparatus 100 according to the present embodiment will be described. The information processing apparatus 100 carries out conversion into a PostScript character string capable of drawing time-series transition of numerical values based on the information in which a value as a measurement result of the sensor 5 set in the machine tool 10 is associated with time. The information processing apparatus 100 calculates a command vector of the statement for the machine tool 10 and a script vector of the PostScript character string (PostScript program), and trains the machine learning model M1 based on the command vector and the script vector. By using the machine learning model M1, a failure of the machine tool 10 may be predicted highly accurately.

Although descriptions are omitted in the embodiment, the information processing apparatus 100 may convert the buffering sensor data into a PostScript program capable of accurately drawing the time-series transition of the numerical values of the sensor data using a regression analysis method such as linear interpolation. In such a case, it may be said that such PostScript program corresponds to data after noise removal. Thus, the machine learning model M1 may be trained using the PostScript program corresponding to the data after the noise removal.

When the machine executes a new command, the operation thereof changes, which also causes the sensor information to vary. Furthermore, when only the sensor information is trained, there is insufficient information to determine whether it is a normal variation caused by the operation change or an abnormal variation that may predict a failure of some kind. Meanwhile, the information processing apparatus 100 may obtain the insufficient information by synchronizing with the command.

The information processing apparatus 100 temporarily generates a PostScript program based on the information in which the value as the measurement result of the sensor 5 is associated with the time, and calculates a script vector based on a character string of the PostScript program, thereby training the machine learning model M1 and predicting a failure. As a result, training and failure prediction may be performed only by the machine learning model M1 for natural language.

The information processing apparatus 100 divides a statement into a plurality of tokens, calculates a vector of each token based on the first vector dictionary D1, and calculates a command vector of the statement by integrating the vectors of the individual tokens. As a result, a command vector representing features of the statement may be generated.

The information processing apparatus 100 generates a PostScript program from the relationship between the value of the sensor 5 and the measurement time, and divides the character string of the PostScript program into a plurality of tokens. The information processing apparatus 100 calculates a vector of each token based on the second vector dictionary D2, and calculates a script vector of the PostScript program by integrating the vectors of the individual tokens. As a result, a script vector representing features of the time-series values of the sensor 5 may be generated from natural language.

The information processing apparatus 100 inputs, to the trained machine learning model M1, the command vector of the statement output to the machine tool 10 and the script vector obtained from the sensor data in the section in which the statement is executed, and obtains an output result. As a result, a failure of the machine tool 10 may be predicted highly accurately.

The information processing apparatus 100 converts a plurality of time-series numerical values included in the sensing information of the sensor set in the machine or in the vicinity of the machine into a character string representing time-series transition, divides the character string into a plurality of tokens, and allocates a vector to the plurality of tokens, thereby generating the second vector dictionary D2 in which the token and the vector corresponding to the token are associated with each other. With the second vector dictionary D2 being used, the token of the PostScript program converted from the sensor data may be easily identified by making a comparison with the token of the PostScript program converted from the sensor data.

While the information processing apparatus 100 generates the PostScript program from the relationship between the value of the sensor 5 and the measurement time in the embodiment described above, here, an example of a relationship between a line shape and a PostScript program will be described.

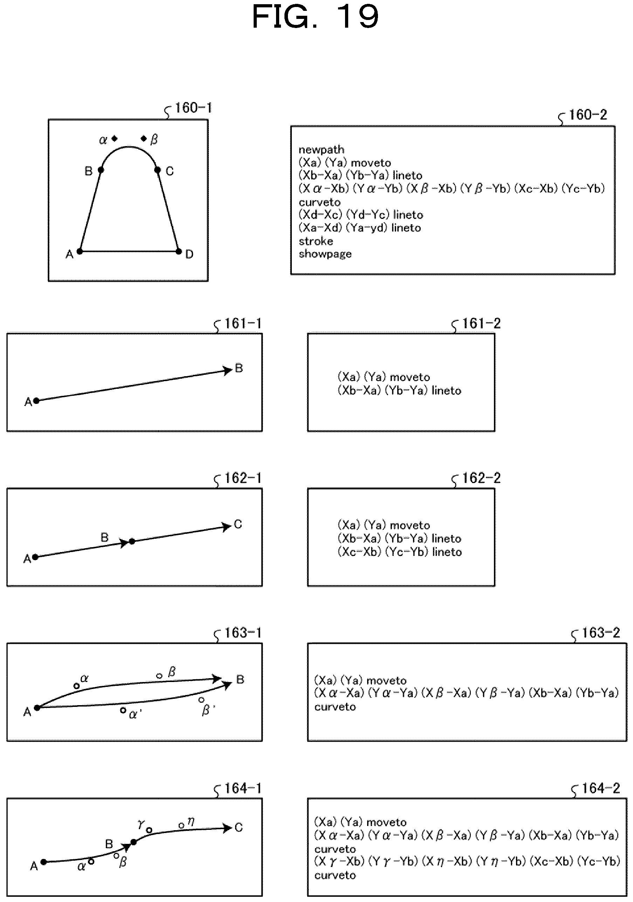

FIG. 19 is a diagram for explaining an exemplary relationship between a line shape and a PostScript program. For example, a PostScript program of line information 160-1 including a straight line and a curve is a PostScript program 160-2. Note that A, B, C, and D of the line information indicate connecting points, and α and β indicate control points. Other pieces of line information are in a similar manner.

A PostScript program of line information 161-1 including one straight line is a PostScript program 161-2. A PostScript program of line information 162-1 including two straight lines is a PostScript program 162-2.

A PostScript program of line information 163-1 corresponding to a Bezier curve is a PostScript program 163-2. A PostScript program of line information 164-1 including two curves (Bezier curves) is a PostScript program 164-2.

For example, the information processing apparatus 100 retains, in a table, a relationship between the line information illustrated in FIG. 19 and the PostScript program corresponding to the line information. The information processing apparatus 100 identifies a combination of line information fitting the shape obtained from the value of the sensor 5 and the measurement time, and combines the PostScript program corresponding to the identified line information to generate a final PostScript program. The information processing apparatus 100 may retain, in a table, a relationship between the PostScript program and line information other than that described with reference to FIG. 19.

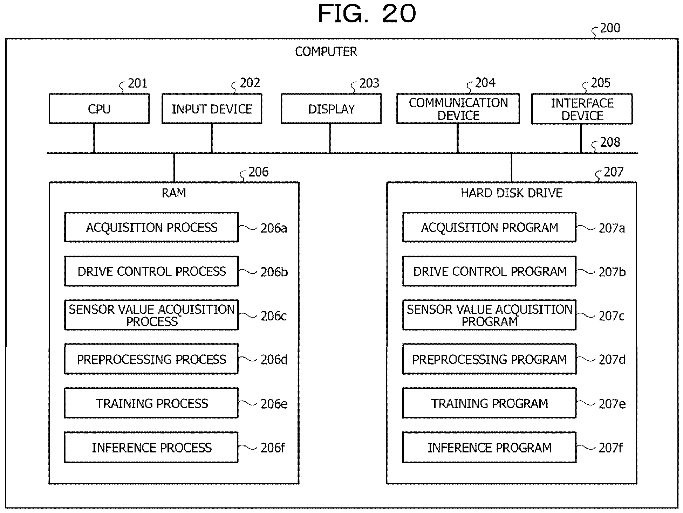

Next, an exemplary hardware configuration of a computer that implements functions similar to those of the information processing apparatus 100 indicated in the embodiment described above will be described. FIG. 20 is a diagram illustrating an exemplary hardware configuration of the computer that implements functions similar to those of the information processing apparatus according to the embodiment.

As illustrated in FIG. 20, a computer 200 includes a central processing unit (CPU) 201 that executes various types of arithmetic processing, an input device 202 that receives data input made by a user, and a display 203. In addition, the computer 200 includes a communication device 204 that exchanges data with the machine tool 10, the sensor 5, an external device, and the like via a wired or wireless network, and an interface device 205. Furthermore, the computer 200 includes a RAM 206 that temporarily stores various types of information, and a hard disk drive 207. Additionally, each of the devices 201 to 207 is coupled to a bus 208.

The hard disk drive 207 includes an acquisition program 207a, a drive control program 207b, a sensor value acquisition program 207c, a preprocessing program 207d, a training program 207e, and an inference program 207f. Furthermore, the CPU 201 reads each of the programs 207a to 207f, and loads it into the RAM 206.

The acquisition program 207a functions as an acquisition process 206a. The drive control program 207b functions as a drive control process 206b. The sensor value acquisition program 207c functions as a sensor value acquisition process 206c. The preprocessing program 207d functions as a preprocessing process 206d. The training program 207e functions as a training process 206e. The inference program 207f functions as an inference process 206f.

Processing of the acquisition process 206a corresponds to the processing of the acquisition unit 151. Processing of the drive control process 206b corresponds to the processing of the drive control unit 152. Processing of the sensor value acquisition process 206c corresponds to the processing of the sensor value acquisition unit 153. Processing of the preprocessing process 206d corresponds to the processing of the preprocessing unit 154. Processing of the training process 206e corresponds to the processing of the training unit 155. Processing of the inference process 206f corresponds to the processing of the inference unit 156.

Note that each of the programs 207a to 207f may not necessarily be stored in the hard disk drive 207 from the beginning. For example, each of the programs may be stored in a "portable physical medium" to be inserted into the computer 200, such as a flexible disk (FD), a compact disc read only memory (CD-ROM), a digital versatile disc (DVD), a magneto-optical disk, an integrated circuit (IC) card, or the like. Then, the computer 200 may read and execute each of the programs 207a to 207f.

### CITATION LIST

### PATENT DOCUMENT

Patent Document 1: Japanese Laid-open Patent Publication No. 2017-033526
Patent Document 2: Japanese National Publication of International Patent Application No. 2021-526250
Patent Document 3: Japanese Laid-open Patent Publication No. 2018-092428
Patent Document 4: Japanese Laid-open Patent Publication No. 2019-091367

### REFERENCE SIGNS LIST

- 40: Corpus data
- 70: Command execution history table
- 80: Sensor value history table
- 90T: raining data table
- 100: Information processing apparatus
- 105: Timer
- 110: Communication unit
- 120: Input unit
- 130: Display unit
- 140: Storage unit
- 150: Control unit
- 151: Acquisition unit
- 152: Drive control unit
- 153: Sensor value acquisition unit
- 154: Preprocessing unit
- 155: Training unit
- 156: Inference unit

## Claims

1. A training program for causing a computer to execute a process comprising:
converting a plurality of time-series numerical values included in sensing information of a sensor set in a machine or around the machine into a character string that represents time-series transition; and
training a machine learning model using training data that includes input data generated based on a control command that controls the machine and information regarding the character string the represents the time-series transition, and a label that indicates whether or not a sign of failure is generated in the machine.

2. The training program according to claim 1, wherein
the converting converts the sensing information into the character string using a program that draws a line in which a plurality of time-series values included in the sensing information is coupled by a line segment or a curve.

3. The training program according to claim 1, the program causing the computer to execute the process further comprising:
calculating a vector of the control command by dividing the control command into a token and integrating a vector of the divided token.

4. The training program according to claim 3, the program causing the computer to execute the process further comprising:
calculating a vector of the sensing information by dividing the character string converted by the converting into a token and integrating a vector of the divided token.

5. The training program according to claim 4, wherein
the calculating the vector of the control command calculates a first vector of the control command output to the machine, and the calculating the vector of the sensing information calculates a second vector of the sensing information that corresponds to the control command output to the machine, the training program causing the computer to execute the process further comprising:
inferring whether or not the sign of failure is generated in the machine by inputting the first vector and the second vector to the trained machine learning model.

6. A training method implemented by a computer, the training method comprising:
the computer converting a plurality of time-series numerical values included in sensing information of a sensor set in a machine or around the machine into a character string that represents time-series transition; and
the computer training a machine learning model using training data that includes input data generated based on a control command that controls the machine and information regarding the character string the represents the time-series transition, and a label that indicates whether or not a sign of failure is generated in the machine.

7. The training method according to claim 6, wherein
the converting converts the sensing information into the character string using a program that draws a line in which a plurality of time-series values included in the sensing information is coupled by a line segment or a curve.

8. The training method according to claim 6, further comprising:
the computer calculating a vector of the control command by dividing the control command into a token and integrating a vector of the divided token.

9. The training method according to claim 8, further comprising:
the computer calculating a vector of the sensing information by dividing the character string converted by the converting into a token and integrating a vector of the divided token.

10. The training method according to claim 9, wherein
the calculating of the vector of the control command includes calculating a first vector of the control command output to the machine,
the calculating of the vector of the sensing information includes calculating a second vector of the sensing information that corresponds to the control command output to the machine, and
the training method further comprises:
inferring whether or not the sign of failure is generated in the machine by inputting the first vector and the second vector to the trained machine learning model.

11. An information processing apparatus comprising a control unit configured to perform processing comprising:
converting a plurality of time-series numerical values included in sensing information of a sensor set in a machine or around the machine into a character string that represents time-series transition; and
training a machine learning model using training data that includes input data generated based on a control command that controls the machine and information regarding the character string the represents the time-series transition, and a label that indicates whether or not a sign of failure is generated in the machine.

12. The information processing apparatus according to claim 11, wherein
the converting converts the sensing information into the character string using a program that draws a line in which a plurality of time-series values included in the sensing information is coupled by a line segment or a curve.

13. The information processing apparatus according to claim 11, the processing further comprising:
calculating a vector of the control command by dividing the control command into a token and integrating a vector of the divided token.

14. The information processing apparatus according to claim 13, the processing further comprising:
calculating a vector of the sensing information by dividing the character string converted by the converting into a token and integrating a vector of the divided token.

15. The information processing apparatus according to claim 14, wherein
the calculating of the vector of the control command includes calculating a first vector of the control command output to the machine,
the calculating of the vector of the sensing information includes calculating a second vector of the sensing information that corresponds to the control command output to the machine, and
the processing further comprises:
inferring whether or not the sign of failure is generated in the machine by inputting the first vector and the second vector to the trained machine learning model.

16. A non-transitory computer-readable recording medium storing a generation program for causing a computer to execute processing comprising:
converting a plurality of time-series numerical values included in sensing information of a sensor set in a machine or around the machine into a character string that represents time-series transition;
dividing the character string into a plurality of tokens;
allocating a vector to the plurality of tokens; and
generating dictionary data in which the plurality of tokens is associated with a plurality of the vectors that corresponds to the plurality of tokens.
